(19) Europäisches Patentamt / European Patent Office / Office européen des brevets

(11) **EP 1 070 964 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(51) Int Cl.:
*G01P 13/04* *(2006.01)*  *F02P 11/02* *(2006.01)*
*F02D 41/22* *(2006.01)*

(21) Anmeldenummer: **00115168.7**

(22) Anmeldetag: **13.07.2000**

(54) **Einrichtung zur Erkennung des Rückdrehens eines rotierenden Teils einer Brennkraftmaschine**

Device for the detection of the reverse rotation of a rotary part of an internal combustion engine

Dispositif de reconnaissance de la rotation inverse d'une partie tournante d'un moteur à combustion interne

(84) Benannte Vertragsstaaten:
**DE FR IT**

(30) Priorität: **20.07.1999 DE 19933844**

(43) Veröffentlichungstag der Anmeldung:
**24.01.2001 Patentblatt 2001/04**

(73) Patentinhaber: **ROBERT BOSCH GMBH**
**70442 Stuttgart (DE)**

(72) Erfinder:
• **Rupp, Ingolf, Dipl.-Ing.**
**71636 Ludwigsburg (DE)**
• **Lehner, Michael, Dipl.-Ing.**
**75417 Muehlacker (DE)**
• **Tatiyosyan, Sevan, Dipl.-Ing.**
**74372 Sersheim (DE)**

(56) Entgegenhaltungen:
**EP-A- 0 603 506 DE-A- 19 650 250
US-A- 5 622 153**

**Beschreibung**

Stand der Technik

Die Erfindung geht aus von einem Steuergerät zur Erkennung des Rückdrehens eines rotierenden Teiles einer Brennkraftmaschine nach dem Hauptanspruch.

Bei mehrzylindrigen Brennkraftmaschinen mit elektronisch geregelter Einspritzung wird im Steuergerät berechnet, wann und wie viel Kraftstoff in welchen Zylinder eingespritzt werden soll. Damit diese Berechnungen in korrekter Weise erfolgen, muss die jeweilige Stellung der Kurbel- bzw. Nockenwelle der Brennkraftmaschine bekannt sein. In der EP-PS 0 017 933 ist bspw. beschrieben, dass die Kurbel- bzw. die Nockenwelle mit einer Scheibe verbunden ist, auf deren Oberfläche wenigstens eine Bezugsmarke als Lücke und zusätzlich eine Vielzahl gleichartiger Markierungen, auch Inkremente genannt, angebracht sind. Diese beiden drehenden Scheiben werden von passenden feststehenden Aufnehmern abgetastet. Aus der zeitlichen Abfolge der von den Aufnehmern gelieferten Impulse wird im Steuergerät eine eindeutige Aussage über die Stellung von Kurbel- und Nockenwelle gewonnen, sodaß im Steuergerät entsprechende Ansteuersignale für die Einspritzung oder Zündung gebildet werden. Zur Sicherstellung, daß die korrekte Stellung der Kurbel- bzw. Nockenwelle vorliegt, muß nach dem Start der Brennkraftmaschine eine Synchronisation durchgeführt werden. Dies erfolgt ausgehend vom Erkennen der Bezugsmarke. Drehzahl und Winkelstellung von Kurbel-und Nockenwelle müssen hochgenau erfaßt werden.

Aus dem Umstand, daß die Nockenwelle bei einem Arbeitsspiel eines Viertakters 360° KW und die Kurbelwelle im gleichen Zeitraum 720° KW zurücklegt und die Stellungen beider Wellen über Bezugsmarken erfaßbar sind, läßt sich bestimmen, in welchem Arbeitstakt die Brennkraftmaschine sich befindet.

Zur Drehzahlerfassung einer Kurbelwelle wird standardmäßig ein Geberscheibe mit 60-2 Zähnen eingesetzt, das von einem Aufnehmer abgetastet wird induktiv, magnetoresistiv oder mittels des Hall-Effekts.

Um einen sicheren Betrieb der Brennkraftmaschine zu gewährleisten, muß sichergestellt werden, daß kein Rückdrehen auftritt bzw. daß ein Rückdreher erkannt wird. Ein Rückdrehen der Brennkraftmaschine kann z.B. durch eine falsche Zündwinkelausgabe im Start, beim Abwürgen der Brennkraftmaschine oder durch Massekräfte bei einem Schleudern des Fahrzeuges auftreten.

Beim Rückdrehen erhält das Steuergerät weiterhin ein Signal vom Aufnehmer wie bei vorwärtsdrehender Brennkraftmaschine. Wird ein Rückdrehen der Brennkraftmaschine nicht erkannt, so stimmt die Winkelbasis im Steuergerät nicht mehr mit der Position der Brennkraftmaschine überein oder es kann zu einer falschen Synchronisation kommen. Dadurch wären undefinierte Einspritzungen und Zündungen die Folge. Dieser unkontrollierte Betriebszustand der Brennkraftmaschine birgt ein hohes Risiko für Zündungen bei offenem Einlaßventil und damit für Saugrohrpatscher. Durch Saugrohrpatscher können der Leerlaufsteller, die Drosselklappe, das Kunststoffsaugrohr oder der Druckmesser oder der Heißfilm-Luftmassenmesser HFM beschädigt werden.

Für Systeme mit Benzin Direkt Einspritzung ist eine Rückdreherkennung besonders wichtig, da der Kraftstofffeintrag in den Zylinder nicht mehr mechanisch gekoppelt ist, sondern aufgrund der Winkelbasis im Steuergerät erfolgt. Somit kann nicht nur die Zündung, sondern auch die Einspritzung zu jedem beliebigen Zeitpunkt erfolgen.

Wird das Einspritzventil im Start betätigt, wenn der Zylinder schon in der Kompression ist, so kann es u.U. nicht mehr geschlossen werden, da der Kompressionsgegendruck zu hoch ist. (Hochdruck im Fuel Rail ist noch nicht aufgebaut) Damit kann Kraftstoff in die Benzinhochdruckverteilung gelangen und das Ventil kann verkoken.

Aus der EP 0 899 573 ist ein Verfahren und eine Vorrichtung zur Erkennung der Drehrichtung einer Brennkraftmaschine bekannt wobei mittels eines Kurbelwellenwinkel-Sensors KW, mittels eines Nockenwellenwinkel-Sensors NW und mittels eines Steuergeräts diese beiden Signale verarbeitet werden. Bei einer bestimmten, durch den Nockenwellen-Sensor erfaßbaren Nockenwellenposition ist eine bestimmte erste durch den Kurbelwellen-Sensor erfaßbare und bei rückwärts drehender Brennkraftmaschine eine vorliegende Kurbelwellenposition, sowie derselben Nockenwellenposition eine bestimmte zweite bei vorwärts drehender Brennkraftmaschine vorliegende Kurbelwellenposition zugeordnet und diese Zuordnungen werden im Steuergerät abfragbar abgespeichert.

Aus der DE-OS 44 348 33 ist eine Einrichtung zur Erkennung des Rückdrehens eines rotierenden Teiles einer Brennkraftmaschine bekannt, bei der ausgewertet wird, ob von der Drehgeschwindigkeit des rotierenden Teiles abhängige Impulse innerhalb eines Zeitrahmens auftreten, wobei bei Überschreiten dieses Zeitrahmens ein Rückdrehen angenommen und das Abwürgen erkannt wird, sofern sich die Brennkraftmaschine nicht in der Startphase befindet. Befindet sie sich in der Startphase, wird Abwürgen nur dann erkannt, wenn der Starter nicht eingerastet ist. Zur Erkennung der Startphase werden geeignete Informationen bzw. Signale ausgewertet.

Den bekannten Einrichtungen und Verfahren ist gemeinsam, dass zur Rückdreherkennung die Position der Nockenwelle mittels festverbundener Geberscheibe und Sensor ausgewertet werden zusätzlich zur Auswertung der Position der Kurbelwelle mittels eigener Geberscheibe und eigenem Sensor.

Dadurch werden weitere Komponenten benötigt, die sich kostenungünstiger auswirken.

Die EP 0 603 506 A zeigt eine Lagebestimmung eines Elektromotors. Hierbei wird die Lage eines Elektromotors in Reaktion auf ein Umpolen, also einer bekannten Ansteuerung des Motors zur Drehrichtungsänderung, dadurch erkannt, dass nach einer erkannten Ansteuerung des Motors zur Drehrichtungsänderung die Zeiten aufeinander folgender Winkelmarkierungen miteinander verglichen werden.

Die Aufgabe der vorliegenden Erfindung besteht darin, eine zuverlässige Rückdreherkennung vorzusehen.

Der vorliegenden Erfindung liegt die Aufgabe zugrunde, eine Einrichtung zur Erkennung von Rückdrehung einer Brennkraftmaschine anzugeben, die ohne Geberscheibe für die Nockenwelle und ohne Sensor dafür auskommt und mittels der Rückdreher aufgrund der Charakteristik des vom Kurbelwellen-Sensors aufgenommenen Signals erkennbar sind.

Diese Aufgabe wird durch den Hauptanspruch gelöst.

Das erfindungsgemäße Steuergerät hat den Vorteil, dass die Störanfälligkeit durch Reduktion von Komponenten verringert wird, daß das System kostengünstiger ist und daß ein motorschädigender Betrieb vermieden werden kann.

Weitere vorteilhafte Ausgestaltungen der Erfindung ergeben sich aus den Unteransprüchen.

Ein Ausführungsbeispiel der Erfindung ist in den Figuren dargestellt.

Es zeigen:

Fig. 1: Ein Schema einer Steuereinrichtung für eine Brennkraftmaschine,

Fig. 2: den typischen Signalverlauf des Drehzahlgebers am Rückdrehpunkt,

Fig. 3: ein Flußdiagramm,

Fig. 4: Signalverläufe eines induktiven Aufnehmers und der Zahnzeiten.

Fig. 5: die zugehörigen Zahnzeiten zu Fig. 4.

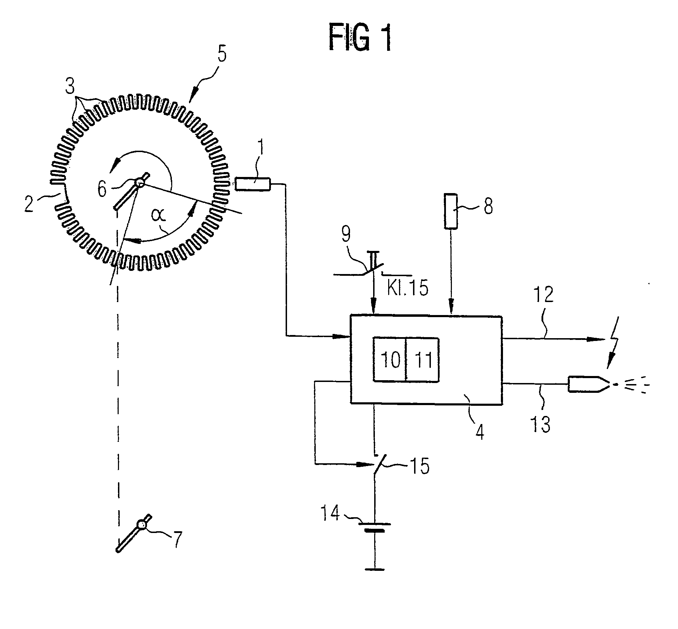

Die Steuerung bzw. Regelung der Brennkraftmaschine vorzugsweise mit Benzin Direkt Einspritzung übernimmt das Steuergerät 4 gemäß Fig. 1. Mit Bezugszeichen 5 ist die Geberscheibe bezeichnet, die starr mit der Kurbelwelle 6 der Brennkraftmaschine verbunden ist und an ihrem Umfang eine Vielzahl gleichartiger Winkelmarken 3 aufweist. Neben diesen gleichartigen Winkelmarken 3 ist eine Bezugsmarke 2 vorhanden, die bspw. durch zwei fehlende Winkelmarken realisiert ist. Die Geberscheibe 5 wird vom Aufnehmer 1, bspw. einem induktiven Aufnehmer oder einem Hall-Sensor oder einem Magnetoresistiven Sensor abgetastet. Die beim Vorbeilaufen der Winkelmarken 3 im Aufnehmer 1 erzeugten Signale werden im Steuergerät 4 in geeigneter Weise aufbereitet.

Ein bei herkömmlicher Brennkraftmaschine vorhandener Phasensensor, der die Nockenwelle 7 bzw. eine mit der Nockenwelle 7 verbundene Scheibe mit einer Markierung abtastet, wird hier nicht benötigt.

Das Steuergerät 4 erhält über verschiedene Eingänge weitere für die Steuerung bzw. Regelung der Brennkraftmaschine erforderliche Eingangsgrößen, die von verschiedenen Sensoren gemessen werden. In Fig. 1 sind diese Sensoren mit 8 bezeichnet. Über einen weiteren Eingang wird ein "Zündung ein" - Signal zugeführt das beim Schließen des Zündschalters 9 von der Klemme 15 des Zündschlosses geliefert wird und dem Steuergerät 4 die Inbetriebnahme der Brennkraftmaschine anzeigt. Das Steuergerät 4 selbst umfaßt wenigstens eine zentrale Prozessoreinheit 10 mit Arithmetisch Logischer Einheit sowie Speicher 11 und Register bzw. Schieberegister.

Im Steuergerät 4 werden Signale für die Einspritzung und Zündung für nicht näher bezeichnete Komponenten der Brennkraftmaschine ermittelt. Diese Signale werden über die Ausgänge 12,13 des Steuergerätes 4 abgegeben.

Die Spannungsversorgung des Steuergerätes 4 erfolgt in üblicher Weise mit Hilfe der Batterie 14, die über den Schalter 15 während des Betriebs der Brennkraftmaschine sowie einer vom Steuergerät 4 selbst gesteuerten Nachlaufphase nach Abstellen des Motors mit dem Steuergerät 4 in Verbindung steht. In der Nachlaufphase werden die nach dem Abstellen der Brennkraftmaschine noch ermittelter Informationen abgespeichert sie stehen dann beim Wiedereinschalten der Brennkraftmaschine dem Steuergerät 4 sofort zur Verfügung.

Diese Informationen umfassen insbesondere auch die letzten Winkelstellungen der Kurbel- bzw. Nockenwelle 6,7 sowie Informationen hinsichtlich der letzten Phasenlage.

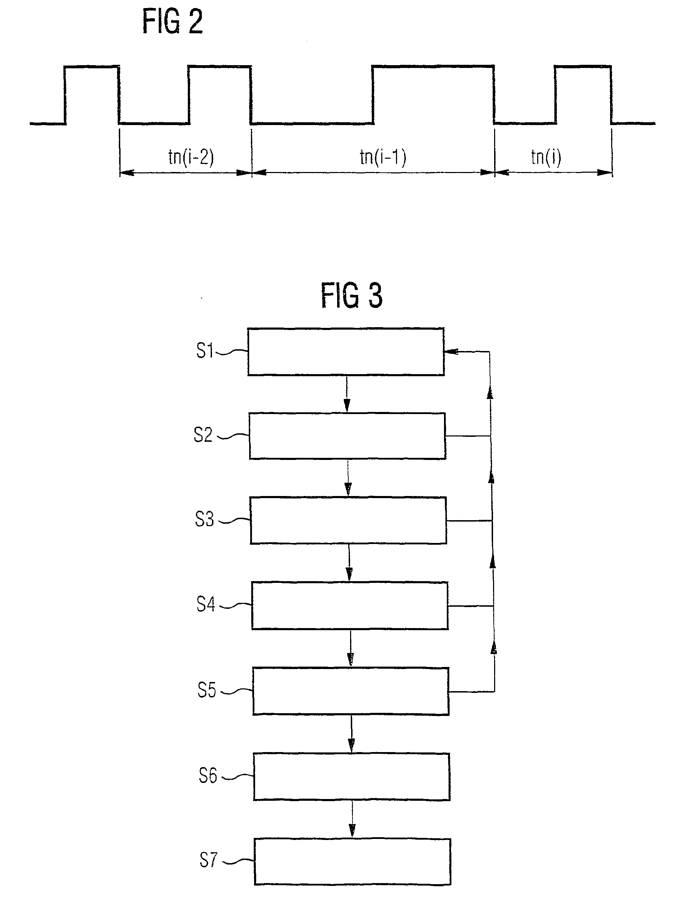

Das Diagramm der Fig. 2 zeigt den Grundgedanken der Erfindung. Der Rückdrehpunkt wird dabei über das Auswerten der Zeiten der Winkelmarken oder Zahnzeiten des Aufnehmersignals im Steuergerät 4 ermittelt. Beim Rückdrehen z.B. beim Abwürgen der Brennkraftmaschine kommt es zu einer Verzögerung der vorwärts drehenden Brennkraftmaschine, am Rückdrehpunkt zu einem kurzen Motorstillstand und anschließend zu einer Beschleunigung der Brennkraftmaschine in die entgegengesetzte Drehrichtung. Dadurch ergibt sich ein typischer Signalverlauf am Rückdrehpunkt. Wird der typische Signalverlauf erkannt, dann wird auf Rückdreher geschlossen. Durch die Rückdreherkennung ist es nun möglich die Einspritz und Zündausgabe zu sperren. Ein schädigender Betrieb der Brennkraftmaschine kann dadurch vermieden werden.

Die Überwachung des Drehzahlgebers erfolgt nur in den Betriebsbereichen, in denen ein Rückdrehen des Motors möglich ist. In diesen Betriebsbereichen wird die Zahnperiodendauer des Aufnehmersignals (Zeit von negativer Zahnflanke i bis i+1) in einem Schieberegister gespeichert. Die Zahnperiodendauer bei der Bezugsmarkenlücke des Drehzahlgebersignals muß dabei entsprechend durch die Anzahl der fehlenden Zähne plus 1 geteilt werden. Ein Verdacht auf einen Rückdrehpunkt wird ermittelt, wenn die Zeiten der Zahnperioden im Schieberegister folgende Bedingungen erfüllen:

$$tn(i) < tn(i-1) \geq tn(i-2) \quad und \quad tn(i-1) > Schwelle \; ts$$

Dabei bedeuten

tn: Zahnperiodendauer
ts: Festwertschwelle in Abhängigkeit der Temperatur

Wird durch obige Bedingungen ein Verdacht auf Rückdrehen der Brennkraftmaschine ermittelt, so werden folgende Plausibilisierungsbedingungen geprüft:

- ist der Anlasser ausgerückt
- befindet sich der Rückdrehpunkt in einem plausiblen Winkelbereich

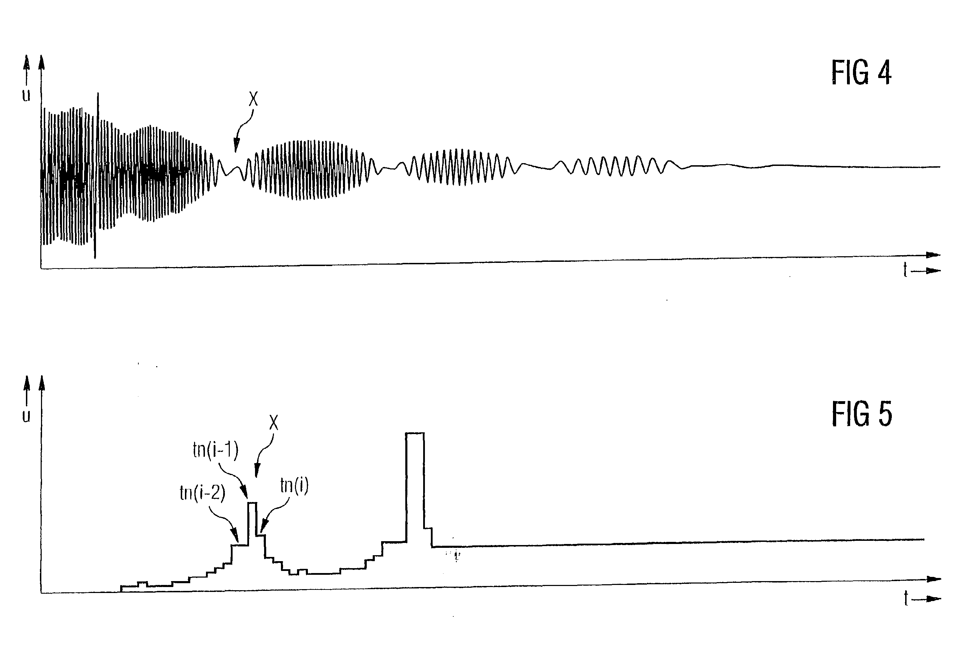

Bei eingerücktem Anlasser wird davon ausgegangen, daß es durch das Moment des Anlassers in Vorwärtsrichtung nicht zu einem Rückdreher kommen kann. In diesem Fall wird der Verdacht auf Rückdreher verworfen.
Ist der Anlasser nicht eingerückt, so wird der Winkel im Arbeitsspiel bestimmt, an dem der Verdacht auf Rückdreher ermittelt wurde. Eine Drehrichtungsumkehr der Brennkraftmaschine ist üblicherweise nur an bestimmten Winkelpositionen zu erwarten. Dies ist bei einem 4-Takt-Motor immer dann der Fall, wenn ein Zylinder in Kompression geht. Reicht die Bewegungsenergie nicht aus, um den oberen Totpunkt zu überschreiten, so kommt es zu einer Drehrichtungsumkehr mit einer Beschleunigung in die entgegengesetzte Drehrichtung. Hat ein Zylinder den Winkel des oberen Totpunkts (Kompressionstakt) überschritten, so ist so lange kein Rückdreher zu erwarten, bis der nächste Zylinder in Kompression geht. Die Brennkraftmaschine befindet sich somit in einem plausiblen Bereich, wenn sich der Kolben in dem in der Kompression befindlichen Zylinder innerhalb von einem Segment vor dem Zünd-Oberen Totpunkt befindet. Wird der Verdacht auf Rückdreher außerhalb dieses Bereichs ermittelt, so wird der Verdacht verworfen.
Wird der Verdacht auf Rückdreher plausibilisiert, so werden Einspritzung und Zündung für eine festgelegte Zeit ausgesetzt.
Einen typischen Verlauf des Aufnehmersignals am Rückdrehpunkt zeigt Fig. 2. Außerdem zeigt die Fig. 4 ein analoges über einen induktiven Sensor aufgenommenes Aufnehmersignal, bei dem die Amplitude mit der Drehzahl zunimmt. Die Zahnzeiten sind in Fig. 5 zugehörig zur Fig. 4 angeordnet. Diese sind in Fig. 5 über einen DA/Wandler ausgegeben und dargestellt. An der Stelle X liegt ein Rückdrehpunkt vor.
Das Flußdiagramm der Fig. 3 zeigt die einzelnen Verfahrensschritte, die durchlaufen werden beim Detektieren von Rückdrehern. Im ersten Schritt S1 werden die drei aufeinanderfolgenden Zeiten tn(i-2), tn(i-1), tn(i) nach dem Start in ein Schieberegister eingelesen und im zweiten Schritt S 2 werden diese Werte miteinander verglichen. Falls die Bedingung zutrifft, daß: tn(i) < tn(i-1)> = tn(i-2) ist erfolgt im Schritt S 3 ein Vergleich von tn(i-1) mit dem Schwellwert ts.
Falls tn(i-1) < Schwellwert ts ist, erfolgt Rücksprung zum Schritt S 1.
Falls tn(i-1) > ts ist, folgen Plausibilisierungsprüfungen, ob der Anläßer ausgerückt ist (Schritt S4). Falls nein wird eine Rückdreherkennung verworfen und es folgt ein Rücksprung zum Schritt S 1. Falls der Anläßer ausgerückt ist, wird im Schritt S 5 geprüft, ob der Zylinder in einem definierten Winkelbereich nahe dem oberen Totpunkt in der Kompression ist. Falls nein, wird eine Rückdreherkennung verworfen und es folgt Rücksprung zum Schritt S 1. Falls ja, wird im Schritt S 6 auf einen Rückdreher geschlossen und im Schritt S 7 werden Einspritzung und Zündung ausgesetzt.

Bezugszeichenliste

1    Aufnehmer

2    Bezugsmarke

3    Winkelmarken

| 4 | Steuergerät |
|---|---|
| 5 | Geberscheibe |
| 6 | Kurbelwelle |
| 7 | Nockenwelle |
| 8 | Sensoren |
| 9 | Zündschalter |
| 10 | Prozessoreinheit |
| 11 | Speicher |
| 12 | Ausgang |
| 13 | Ausgang |
| 14 | Batterie |
| 15 | Schalter |

**Patentansprüche**

1. Steuergerät zur Erkennung des Rückdrehens eines rotierenden Teils einer Brennkraftmaschine, wobei die Brennkraftmaschine einen Aufnehmer (1) aufweist, der das rotierendes Teil, das wenigstens eine Bezugsmarke (2) und eine Vielzahl gleichartiger Winkelmarken (3) aufweist, abtastet und beim Vorbeilaufen der Winkelmarken (3) Impulse abgibt, und wobei das Steuergerät (4), dem das Ausgangssignal des Aufnehmers (1) sowie weitere, vom Betriebszustand der Brennkraftmaschine abhängige Signale zugeführt werden, Zeiten tn zwischen aufeinanderfolgenden Impulsen des Signals des Aufnehmers (1) ermittelt, wobei das Steuergerät (4) die Zeit tn(i-1) beim Vorbeilaufen einer beliebigen Winkelmarke (3) am Aufnehmer (1) mit der Zeit tn(i-2) der unmittelbar vorhergehenden Winkelmarke (3) und der Zeit tn(i) der unmittelbar nachfolgenden Winkelmarke (3) vergleicht, und falls die Zeit tn(i-1) ein Maximum in Bezug auf die Zeiten tn(i-2) und tn(i) darstellt, das Steuergerät (4) die Zeit tn(i-1) mit einem Schwellwert ts vergleicht, und falls die Zeit tn(i-1) größer als der Schwellwert ts ist, das Steuergerät (4) Plausibilisierungsbedingungen in die Auswertung einbezieht, so dass erkannt werden kann, ob ein Rückdrehen der Brennkraftmaschine vorliegt und die Ausgabe weiterer Einspritzungen und/oder Zündungen unterdrückt, bis nach Ablauf einer vorgebbaren Zeit eine Neusynchronisation der Brennkraftmaschine erfolgt.

2. Steuergerät nach Anspruch 1, **dadurch gekennzeichnet dass** zur Ermittlung, ob die Zeit tn(i-1) ein Maximum in Bezug auf die Zeiten tn(i-2) und tn(i) darstellt, das Steuergerät (4) je drei aufeinanderfolgende Zeiten tn(i-2), tn(i-1) und tn(i) in ein Schieberegister des Steuergeräts (4) einliest und anschließend in der Arithmetisch-Logischen-Einheit des Steuergeräts (4) miteinander vergleicht.

3. Steuergerät nach Anspruch 1, **dadurch gekennzeichnet, dass** bei den Plausibilisierungsbedingungen das Steuergerät (4) prüft, ob der Anlasser ausgerückt ist und ob der durch Vergleich der Zeiten tn(i-2), tn(i-1) und tn(i) ermittelte Rückdrehpunkt an einen plausiblen Winkelbereich ermittelt wurde, in einem Bereich, wo ein Zylinder in die Kompression geht.

4. Steuergerät nach Anspruch 2 oder 3, **dadurch gekennzeichnet, dass** das Steuergerät (4) die Unterdrückung von Zünd- und/oder Einspritzimpulsen solange durchführt, bis eine vorgebbare Zeitspanne abgelaufen ist, wobei diese Zeitspanne so gewählt ist, dass innerhalb dieser Zeitspanne nach dem Abwürgen der Brennkraftmaschine ein Stillstand zu erwarten ist.

**5.** Steuergerät nach Anspruch 4, **dadurch gekennzeichnet, dass** die Neusynchronisation erfolgt, sobald das Steuergerät (4) erkennt, dass kein Synchronisationsfehler mehr vorliegt.

**Claims**

**1.** Controller for detecting reverse rotation of a rotating part of an internal combustion engine,
with the internal combustion engine having a pick-up (1) which scans the rotating part, which has at least one reference mark (2) and a large number of identical angle marks (3), and emits pulses when the angle marks (3) run past, and
with the controller (4), which is supplied with the output signal from the pick-up (1) and also with further signals which are dependent on the operating state of the internal combustion engine, determining times tn between successive pulses of the signal from the pick-up (1),
with the controller (4) comparing time tn(i-1) when any desired angle mark (3) passes the pick-up (1) with time tn(i-2) of the immediately preceding angle mark (3) and with time tn(i) of the immediately successive angle mark (3), and, if time tn(i-1) represents a maximum in relation to times tn(i-2) and tn(i), the controller (4) comparing time tn(i-1) with a threshold value ts, and,
if time tn(i-1) is greater than the threshold value ts, the controller (4) incorporating plausibility conditions in the evaluation, so that it is possible to detect whether the internal combustion is rotating in reverse, and suppressing the output of further injection operations and/or ignition operations until the internal combustion is resynchronized after a predefinable time has elapsed.

**2.** Controller according to Claim 1, **characterized in that**, in order to determine whether time tn(i-1) represents a maximum in relation to times tn(i-2) and tn(i), the controller (4) reads in each case three successive times tn(i-2), tn(i-1) and tn(i) into a shift register of the controller (4) and then compares said times with one another in the arithmetic logic unit of the controller (4).

**3.** Controller according to Claim 1, **characterized in that** the plausibility conditions involve the controller (4) checking whether the starter is disengaged and whether the point of reverse rotation, which is determined by comparison of times tn(i-2), tn(i-1) and tn(i), was determined in a plausible angle range in a region where a cylinder is compressed.

**4.** Controller according to Claim 2 or 3, **characterized in that** the controller (4) suppresses ignition and/or injection pulses until a predefinable time period has elapsed, with this time period being selected such that the internal combustion engine can be expected to be stationary within this time period after the internal combustion engine has stalled.

**5.** Controller according to Claim 4, **characterized in that** resynchronization is performed as soon as the controller (4) detects that there are no more synchronization errors.

**Revendications**

**1.** Appareil de commande pour la détection d'une inversion du sens de rotation d'une partie tournante d'un moteur à combustion interne,
le moteur à combustion interne présentant un enregistreur (1) qui palpe la partie tournante qui présente au moins un repère de référence (2) et plusieurs repères angulaires (3) identiques, et qui délivre une impulsion lors du passage des repères angulaires (3),
l'appareil de commande (4) auquel sont apportés le signal de sortie de l'enregistreur (1) ainsi que d'autres signaux qui dépendent de l'état de fonctionnement du moteur à combustion interne déterminant les durées tn qui s'écoulent entre des impulsions successives du signal de l'enregistreur (1),
l'appareil de commande (4) comparant la durée tn(i-1) au passage d'un repère angulaire (3) quelconque devant l'enregistreur (1) à la durée tn(i-2) du repère angulaire (3) immédiatement précédent et à la durée tn(i) du repère angulaire (3) immédiatement suivant,
au cas où la durée tn(i-1) constitue un maximum par rapport aux durées tn(i-2) et tn(i), l'appareil de commande (4) compare la durée tin(i-1) à une valeur de seuil ts et
au cas où la durée tn(i-1) est supérieure à la valeur de seuil ts, l'appareil de commande (4) fait intervenir des conditions de plausibilité dans l'évaluation de manière à pouvoir détecter si le moteur à combustion interne a inversé son sens de rotation et interrompt l'envoi d'autres injections et/ou la formation d'autres allumages jusqu'à ce qu'une resynchronisation du moteur à combustion interne ait lieu après qu'une durée prédéterminée s'est écoulée.

2. Appareil de commande selon la revendication 1, **caractérisé en ce que** pour déterminer si la durée tn(i-1) constitue un maximum par rapport aux durées tn(i-2) et tn(i), l'appareil de commande (4) lit les trois durées successives tn(i-2), tn(i-1) et tn(i) dans un registre glissant de l'appareil de commande (4) et effectue ensuite la comparaison dans l'unité arithmétique-logique de l'appareil de commande (4).

3. Appareil de commande selon la revendication 1, **caractérisé en ce que** dans les conditions de plausibilité, l'appareil de commande (4) vérifie si le démarreur a reculé ou détermine par comparaison des durées tn(i-2), tn(i-1) et tn(i) si le point d'inversion du sens de rotation a été déterminé dans une plage angulaire plausible, dans une plage dans laquelle un cylindre passe en compression.

4. Appareil de commande selon les revendications 2 ou 3, **caractérisé en ce que** l'appareil de commande (4) interrompt les impulsions d'allumage et/ou d'injection tant qu'un laps de temps prédéterminé ne s'est pas écoulé, ce laps de temps étant sélectionné de telle sorte qu'un arrêt puisse être attendu pendant ce laps de temps après que le moteur à combustion interne a calé.

5. Appareil de commande selon la revendication 4, **caractérisé en ce que** la resynchronisation a lieu dès que l'appareil de commande (4) a détecté qu'il n'y a plus d'erreur de synchronisation.

# FIG 1

KI.15

## FIG 2

tn(i-2)  tn(i-1)  tn(i)

## FIG 3

S1

S2

S3

S4

S5

S6

S7

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP PS0017933 A
- EP 0899573 A
- DE OS4434833 A
- EP 0603506 A